# DEMANDE DE BREVET EUROPEEN

(11) **EP 1 061 732 A1**
(43) Date de publication de la demande: **20.12.2000**
(21) Numéro de dépôt: 00401656.4
(22) Date de dépôt: 13.06.2000
(51) Int. Cl.: H04N 3/15

(54) **Procédé de polarisation des photodiodes d'un capteur matriciel par leurs diodes/photodiodes connexes**

(30) Priorité: 15.06.1999 FR 9907540
(71) Demandeur: COMMISSARIAT A L'ENERGIE ATOMIQUE, 75752 Paris Cédex 15 (FR); SOCIETE FRANCAISE DE DETECTEURS, INFRAROUGES- SOFRADIR, F-92290 Chatenay Malabry (FR)
(72) Inventeur: Pantigny, Philippe, 38640 Claix (FR); Martin, Jean-Luc, 38620 Saint Geoire en Valdaine (FR); Hamelin, Régis, 69003 Lyon (FR); Paltrier, Sylvain, 38340 Voreppe (FR)
(74) Mandataire: Des Termes, Monique

(57) **Abrégé**

Un capteur d'images comporte un circuit de détection (17) ayant des diodes (3) de détection qui pendant une prise de vue sont polarisées en inverse. Il est caractérisé en ce que la tension de cathode des diodes de détection est contrôlée par la polarisation en direct de diodes du circuit de détection (17) au travers du circuit de lecture (20). Les diodes de contrôle peuvent être des diodes dédiées ou des diodes de photodétection polarisées en direct. Dans ce dernier cas, une image est prise en plusieurs séquences.

## Description

### 1) Domaine de l'invention

L'invention se situe dans le domaine des réseaux de détecteurs de rayonnements électromagnétiques, en particulier de rayonnements visible ou infrarouge. Le domaine se limite plus particulièrement aux capteurs d'image (réf. [1], [2] dans la liste figurant en annexe) constitués d'un circuit de détection interconnecté à un circuit de lecture. Elle concerne un dispositif et un procédé de polarisation de tels photodétecteurs.

### 2) Arrière plan technologique

### 2.1) Généralités sur la photodétection

Une photodiode est un dispositif semi-conducteur qui, lorsqu'il est éclairé par un rayonnement d'énergie suffisante, délivre un photocourant par génération de paires électron-trou. Deux catégories de photodiodes peuvent être réalisées, selon le type du dopage des jonctions et du substrat, la jonction de type N sur matériau semi-conducteur de type P et son dual, jonction P sur matériau N.

Seul le cas des photodiodes N sur P sera évoqué dans la suite. Tous les principes qui vont être exposés sont aisément transposables aux photodiodes de type P sur substrat N pour un homme du métier.

Le circuit de détection est en général formé d'un arrangement de photodiodes élémentaires implantées à un pas régulier selon une matrice de m lignes par n colonnes où toutes les jonctions sont coplanaires. Chaque photodiode est couplée à un préamplificateur implanté sur le circuit de lecture qui assure la conversion du photocourant délivré par le détecteur en une grandeur physique compatible avec les chaînes de traitement analogique réalisables dans les circuits intégrés (courant, charge ou tension). Les fonctions implantées sur le circuit de lecture permettent aussi de multiplexer les informations délivrées par chaque photodiode vers un nombre restreint de sorties vidéo. L'information délivrée par chaque photodiode et conditionnée par la chaîne analogique du circuit de lecture correspond à un élément de l'image ou pixel.

Le circuit de détection peut être éclairé soit sur la face où sont réalisées les jonctions, soit sur la face opposée. Le circuit de détection est interconnecté au circuit de lecture au moyen d'un procédé adapté, par exemple des microbilles dans le cas des capteurs réalisés au moyen d'un circuit de détection hybridé retourné sur un circuit de lecture (réf. [3]).

Le principe de la détection photovoltaïque permet, par exemple, de réaliser des capteurs d'image opérant dans la bande spectrale du domaine visible, ou dans celle de l'infrarouge (imagerie thermique). La sélectivité en bande spectrale est obtenue en réalisant les jonctions des photodiodes sur un matériau semi-conducteur dont la largeur de la bande interdite est adaptée à la longueur d'onde à détecter.

### 2.2 Etat de la technique relativement à la polarisation des photodiodes

L'invention porte sur la méthode utilisée pour polariser les photodiodes du circuit de détection. La revue de l'état de l'art va être ci-après axée sur la problématique de la polarisation des photodiodes de ces capteurs.

Le principe de fonctionnement du capteur sera tout d'abord rappelé, puis l'impact du matériau sur lequel est réalisé le circuit de détection sur la contrôlabilité - c'est-à-dire la possibilité de forcer un niveau, en l'occurrence d'appliquer une source de tension - des noeuds électriques des photodiodes.

### 2.2.1) Principe de fonctionnement d'un capteur

La figure la représente d'une part, une coupe au travers de l'épaisseur d'une jonction entre un substrat 1 semi-conducteur dopé P et une zone 2 dopée N réalisant une jonction N/P. La représentation symbolique est constituée par la représentation symbolique d'une diode 3 dont l'anode 4 est située au-dessus de la cathode 5, de manière à montrer que c'est le substrat qui est dopé P.

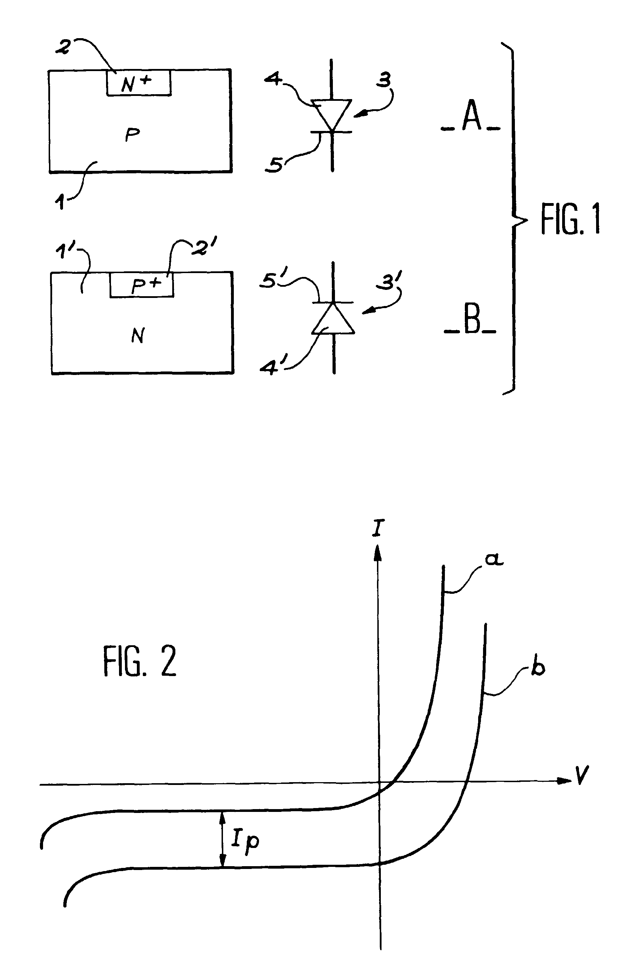

La figure 1b, représente les mêmes éléments, mais cette fois c'est le substrat 1 qui est dopé N. Une zone 2' dopée P est implantée sur ce substrat 1' réalisant une jonction P/N. Symboliquement, cette jonction est représentée par une diode 3' dont l'anode 4' est située au-dessous de la cathode 5' de manière à montrer que c'est le substrat 1' qui est dopé N.

La caractéristique courant-tension d'une telle jonction est représentée figure 2. Sur la courbe (a), on retrouve la caractéristique non linéaire de la jonction idéale sous éclairement nul : faible impédance dynamique lorsque la diode est polarisée en direct, la tension de l'anode étant supérieure à la tension cathode, et au contraire forte impédance dynamique lorsque la photodiode est polarisée en inverse avec une tension anode inférieure à la tension de cathode. Lorsque la photodiode est éclairée, la caractéristique courant-tension, représentée par la courbe (b) est translatée verticalement d'une quantité I_{P} égale au photocourant généré par la photodiode. Il convient de noter que par convention, les caractéristiques courant-tension des photodiodes sont représentées dans les quadrants conventionnels et non pas avec les signes réels des courants et tensions.

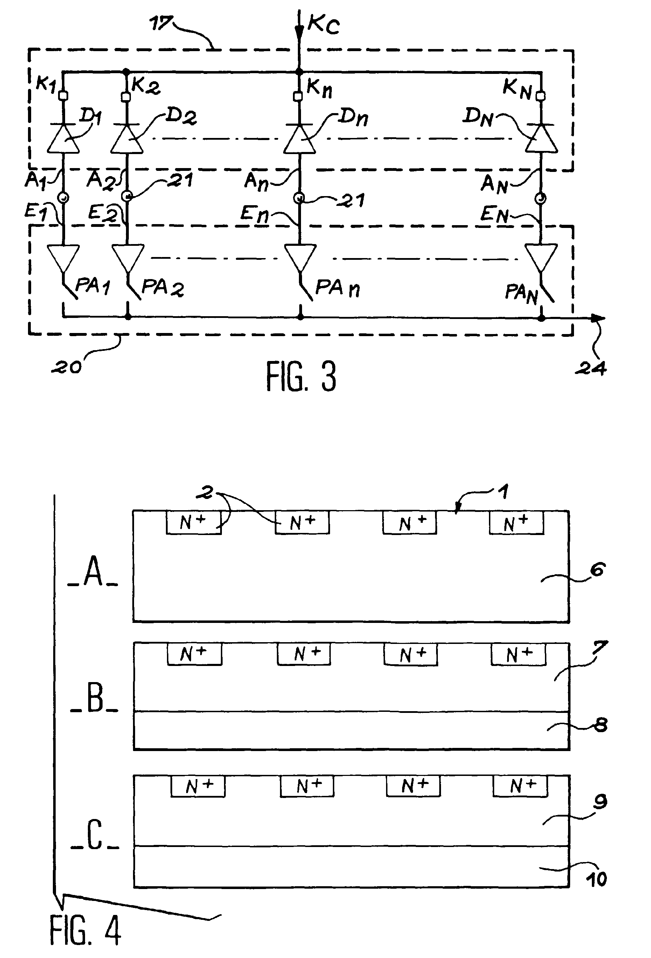

Le schéma de principe d'un capteur est représenté figure 3, il correspond à la coupe d'un capteur matriciel, perpendiculairement aux plans des couches, selon l'une des directions des lignes ou colonnes de la matrice de détecteurs.

Ce schéma illustre le cas d'un circuit de détection 17 hybridé, retourné sur un circuit de lecture 20 comme mentionné, par exemple, dans le document [2]. Les N photodiodes de la rangée correspondant au plan de coupe sont repérées de D₁ à D_{N}, leurs anodes de A_{**1**} à A_{**N**} et leurs cathodes de K_{**1**} à K_{**N**}. Les anodes des photodiodes du circuit de détection 17 sont connectées aux entrées E_{**1**}.....E_{**N**} du circuit de lecture 20. La continuité entre les circuits de détection 17 et de lecture 20 est assurée par une connexion verticale par exemple de type microbille d'indium 21.

Les préamplificateurs du circuit de lecture 20 sont numérotés de PA_{**1**} à PA_{**N**}.

Le processus de formation de l'image de cette rangée de pixels est le suivant :
- 1. polarisation de la photodiode pendant la prise de vue de façon à ce qu'elle débite un photocourant ;
- 2. traitement du courant délivré par la photodiode au moyen des préamplificateurs ;
- 3. multiplexage du signal de sortie de chaque préamplificateur vers une sortie vidéo.

Le processus est répété à la fréquence de l'image.

En pratique, chaque photodiode est polarisée dans la partie inverse de sa caractéristique, à une tension où l'intensité de son courant sous éclairement nul est relativement faible par rapport à l'intensité de son photocourant. Le contrôle de la différence de potentiel entre l'anode et la cathode de chaque photodiode est donc déterminant dans le fonctionnement du circuit de détection.

Le contrôle du potentiel de chaque anode est assuré par l'entrée du préamplificateur (masse virtuelle d'un amplificateur différentiel par exemple). Par contre, les cathodes de chaque photodiode ne sont pas contrôlables individuellement. Elles sont en fait court-circuitées par le matériau semi-conducteur où sont réalisées les jonctions. Les cathodes K_{**1**} à K_{**N**} ne peuvent donc être contrôlées que de manière indirecte, via un seul noeud électrique du circuit de détection identifié K_{**C**} -pour cathode commune.

### 2.2.2) Impact du substrat du circuit de détection

Les caractéristiques électriques des couches constituant la tranche sur laquelle est réalisé le circuit de détection vont déterminer la résistance d'accès à la cathode de chaque photodiode. Une coupe de principe de ces tranches est représentée sur la figure 4. Trois catégories de tranches peuvent être distinguées :
- 1. celles dites à substrat massif, représentées fig. 4-A ;
- 2. celles dites à substrat épitaxié, représentées fig. 4-B ;
- 3. celles dites à substrat isolant, représentées fig. 4-C.

Le substrat massif figure 4-A, est constitué d'une seule couche 6 sur toute l'épaisseur de la tranche. La résistivité ρ₁ de la couche est homogène et adaptée à la réalisation de jonctions performantes d'un point de vue photodétection.

Le substrat épitaxié, figure 4-B, est un bi-couche 7, 8. Les jonctions des photodiodes sont réalisées dans la couche 7 supérieure de faible épaisseur et de résistivité ρ_{**2**} adaptée à la réalisation des photodiodes. La couche 8 inférieure est réalisée dans le même matériau. Elle est très épaisse et sa résistivité ρ_{**3**} est très faible, de façon à minimiser la résistance d'accès aux cathodes des jonctions.

La couche supérieure 9 d'un substrat isolant 10, figure 4-C, présente des caractéristiques d'épaisseur et de résistivité voisines de celle du substrat épitaxié. Sa semelle 10 est aussi très épaisse. Elle peut être réalisée avec des empilements de matériaux divers, mais dans tous les cas elle se comporte comme un isolant électrique.

Les circuits de détection opérant dans la gamme spectrale du visible sont réalisés sur des substrats en silicium massif ou épitaxié, voire isolant (réf. [1]). Ceux opérant dans la gamme spectrale infrarouge sont plutôt réalisés sur des substrats isolants (par exemple matériau semi-conducteur HgCdTe sur isolant CdZnTe de la réf. [2]). Dans tous les cas, les photodiodes sont coplanaires.

### 2-2-3) Contrôlabilité du potentiel cathode

### 2.2.3.1 - contrôle via la face opposée aux jonctions

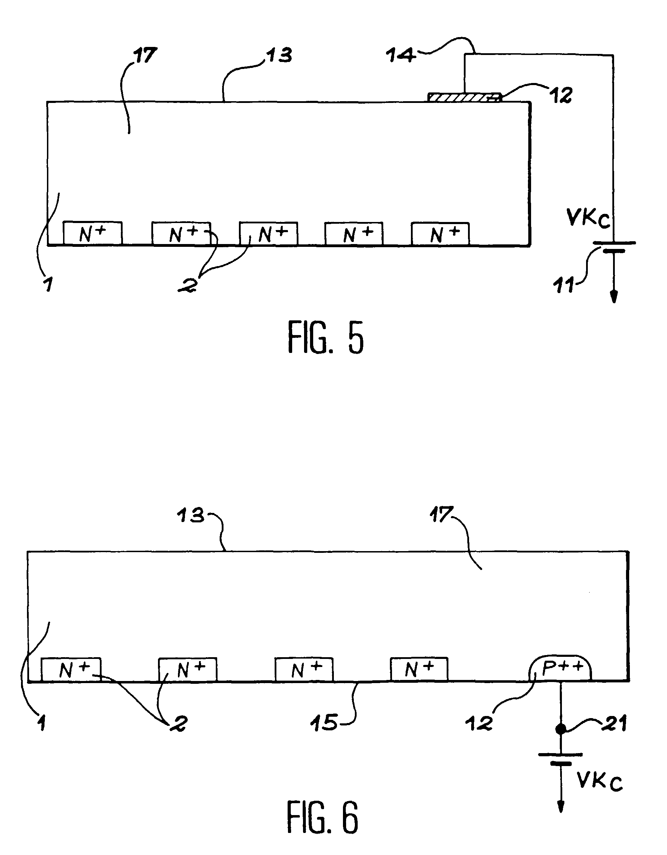

La cathode commune des photodiodes des circuits 17 de détection réalisés sur les substrats massif ou épitaxié peut, à l'évidence, être contrôlée en assurant la continuité électrique entre une source de tension 11 et un contact 12 réalisé sur la face opposée 13 aux jonctions 1,2 du circuit de détection. Cette solution représentée figure 5, n'est cependant pas toujours applicable.

Tout d'abord, le procédé technologique de fabrication doit intégrer des étapes complémentaires afin de réaliser le contact ohmique 12 sur la face 13 opposée aux jonctions 1,2.
Ensuite, pour les capteurs éclairés au travers de la face 13 du substrat, la perte de flux lumineux au niveau du contact 12 ohmique de la face 13 du substrat, voire son atténuation tout au long de la traversée peut s'avérer rédhibitoire.

Enfin, appliquer une source de tension à la face 13 opposée aux jonctions (1,2) peut se faire au moyen d'un fil 14 conducteur soudé représenté également figure 5, mais cela suppose que :
■ le circuit supporte les contraintes mécaniques et thermiques induites par le procédé d'interconnexion utilisé,
■ le circuit de détection est entouré d'une zone dont les dimensions sont compatibles avec ce procédé - non dégradation des caractéristiques électro-optiques des photodiodes situées à proximité, pas d'ombres de fils sur la zone sensible optiquement.

Ces raisons font que, bien souvent, la contrôlabilité de la cathode commune est assurée sur les circuits de détection réalisés sur les substrats massifs et épitaxiés en employant la technique qu'il est nécessaire de mettre en oeuvre pour les substrats isolants et qui va être décrite ci-après en liaison avec la figure 6.

### 2.2.3.2 - contrôle via la face jonction

Le procédé de fabrication du circuit de détection intègre dans ce cas des étapes technologiques qui permettent de réaliser, en plus des jonctions 1,2 du type N sur le matériau semi-conducteur de type P, un contact ohmique 12 sur ce matériau.

Une coupe de principe d'un tel circuit de détection 17 est représentée sur la figure 6. Les zones N⁺ 2 matérialisent les anodes des photodiodes. La zone P⁺⁺ matérialise le contact ohmique 12 sur le matériau de type P.

Au niveau du capteur, la continuité électrique entre le contact ohmique 12 de la cathode commune et son alimentation est assurée via le circuit de lecture, l'interconnexion entre le contact ohmique 12 réalisé sur le circuit de détection 17, et le circuit de lecture est assuré par le même procédé d'interconnexion que celui utilisé pour relier chaque anode à son préamplificateur, par exemple une microbille d'indium 21.

Comme on le voit, cette technique de polarisation de la cathode commune via la face 15 contenant les jonctions s'applique aux circuits réalisés sur les 3 catégories de substrat.

Outre le fait qu'elle évite toute opération de connectique sur la face 13 du substrat, cette méthode libère la face 13 opposée aux jonctions de toute contrainte électrique liée à la cathode commune. Il est ainsi possible d'optimiser la réponse optique des circuits éclairés à travers leur substrat, par exemple en enlevant tout ou partie de la semelle du substrat.

### 2.4 Résumé

Quelle que soit la nature du substrat utilisé pour fabriquer le circuit de détection 17, le contrôle du potentiel de la cathode commune des photodiodes au moyen d'un contact ohmique 12 sur le matériau semi-conducteur, réalisé sur la face 15 contenant les jonctions coplanaires du circuit de détection s'avère un bon compromis entre :
- les difficultés de fabrication du circuit de détection 17
- les performances électro-optiques du capteur
- les contraintes de montage dans les boîtiers.

Ce mode de contrôle présente toutefois quelques inconvénients qui vont être abordés ci-après.

### 3) Critique de l'art

### 3.1 Résistance série des photodiodes

Nous supposerons, comme c'est le cas dans la plupart des circuits de détection que le contact ohmique 12 de la cathode commune est implanté à la périphérie de la zone occupée par les photodiodes.

### 3.1.1 schéma électrique équivalent

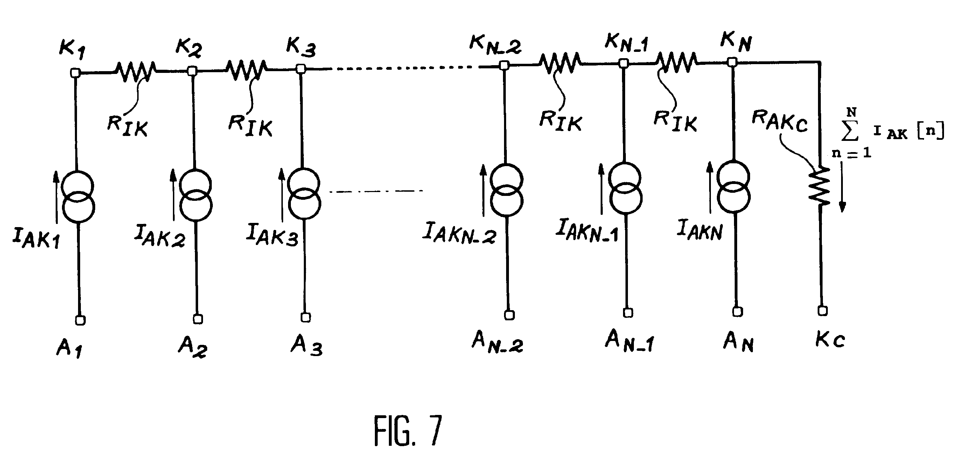

Le schéma électrique de la figure 3 doit être modifié comme indiqué sur la figure 7 pour prendre en compte les phénomènes induits par la valeur finie de la résistivité du matériau semi-conducteur où sont réalisées les jonctions :
- la résistance inter-cathode (R_{**IK**}) traduit la résistance électrique équivalente entre la cathode d'une photodiode et celle qui lui est connexe,
- la résistance d'accès au noeud électrique cathode commune (R_{**AKC**}) représente la résistance électrique de la zone qui sépare la cathode K_{**N**} du contact ohmique 12 de la cathode commune K_{**C**}.

Chaque photodiode se conduit comme un générateur d'un courant IA_{**K1**} .... IA_{**KN**}. Le courant généré pour chaque photodiode traverse les résistances R_{**IK**} séparant la photodiode de la résistance R_{**AKC**} et la résistance R_{**AKC**} elle-même en sorte que celle-ci est traversée par la somme des courants des photodiodes.

Ce schéma mono-dimensionnel est suffisant pour la démonstration. Sa généralisation à un circuit de détection bi-dimensionnel conduit à un réseau bi-dimensionnel de résistances électriques intercathodes, chaque photodiode étant connexe avec les photodiodes implantées sur ses quatre côtés et à des résistances d'accès à la cathode commune variables en fonction de la répartition des zones P⁺⁺ en périphérie des photodiodes sur un côté, deux côtés adjacents, deux côtés parallèles ou bien encore sur les quatre côtés de la matrice de photodiodes.

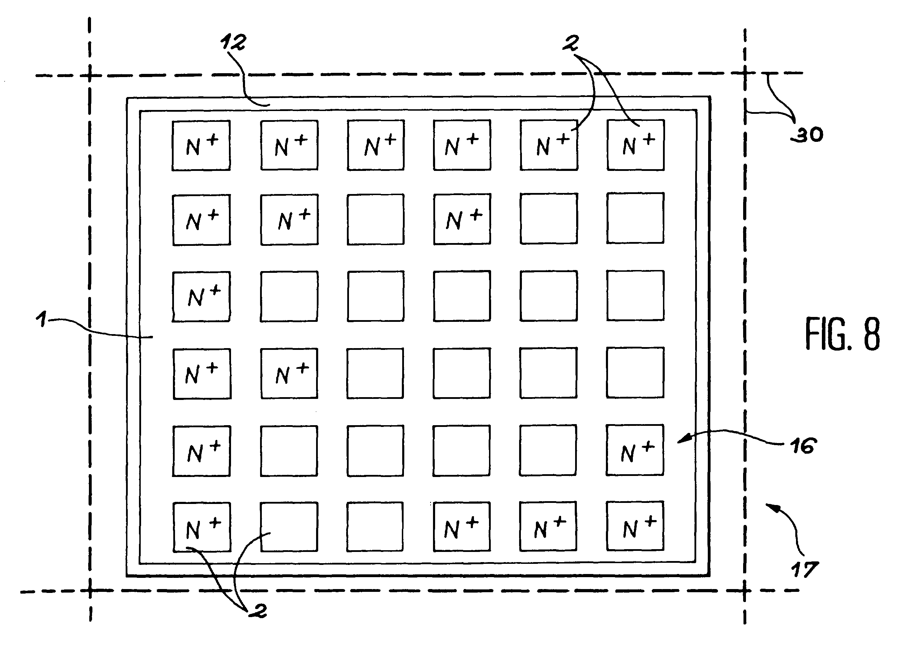

Une telle matrice de photodiodes est représentée schématiquement figure 8 et sera commentée ci-après. Cette matrice 16 comporte un ensemble de jonctions 1,2, disposés de façon matricielle. Un contact P⁺⁺ 12 constituant une ligne fermée entoure l'ensemble 16 matriciel de jonctions 1,2. Les limites 30 du circuit de détection 17 sont représentées par une ligne pointillée fermée 30.

### 3.1.2 variation spatiale de la polarisation effective

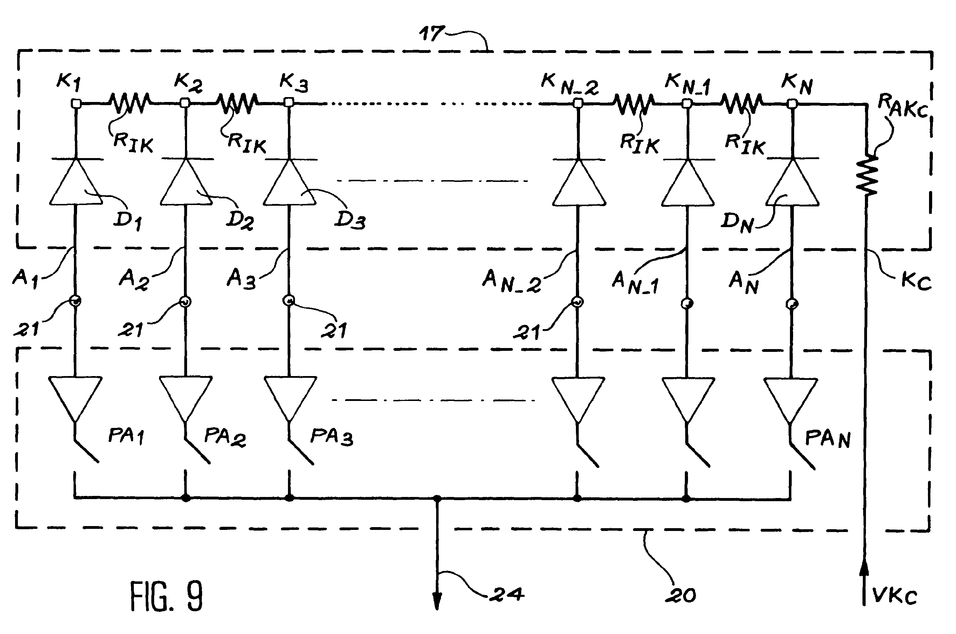

Autour de son point de fonctionnement, chaque photodiode D_{**n**} peut être assimilée comme expliqué plus haut en liaison avec la figure 7 à un générateur de courant de valeur I_{**AKN**}. Une telle représentation fait l'objet de la figure 9.

Le schéma électrique de la figure 9 met clairement en évidence que les courants délivrés par les photodiodes se somment au fur et à mesure que l'on se rapproche du noeud électrique K_{**C**}. La circulation de ces courants dans les résistances R_{**IK**} provoque une chute de potentiel qui est d'autant plus grande que l'on s'éloigne du noeud K_{**C**}. Le potentiel de chaque cathode K_{**N**} n'est donc pas égal à la tension appliquée au noeud cathode commune K_{C}.

Cette technique de polarisation introduit une variation spatiale de la tension appliquée à la cathode des photodiodes : les photodiodes ne sont pas, tout étant égal par ailleurs, polarisées sous la même différence de potentiel entre anode et cathode.

La variation spatiale du point de fonctionnement des photodiodes a pour effet, à partir d'un certain seuil de réduire les performances du capteur car la plage de polarisation optimale s'en voit réduite.

L'amplitude de la variation spatiale de la dépolarisation est d'autant plus importante que le nombre de côtés sur lequel peut être implanté le contact ohmique 12 P⁺⁺ est réduit.

### 3.1.1 réponse à un sur-éclairement ponctuel

La réponse à un sur-éclairement limité dans l'espace est un critère déterminant dans un capteur d'image. Idéalement, la réponse des photodiodes de la zone sur-éclairée ne doit pas modifier la réponse des photodiodes situées en-dehors de cette zone.

Vu le schéma électrique de la figure 9, il est clair que le sur-éclairement d'une photodiode située au centre du circuit de détection va provoquer la circulation d'un fort courant à travers les résistances R_{**IK**} et R_{**AKC**} qui le sépare du noeud électrique K_{**C**}. La chute de potentiel induite par la circulation de ce courant va modifier le potentiel des cathodes des photodiodes situées en amont et en aval de la photodiode sur-éclairée. N'étant plus polarisées au même point de fonctionnement, ces photodiodes vont délivrer un courant d'intensité différente si leur résistance dynamique n'est pas infinie, alors que l'éclairement qu'elles reçoivent n'a pas changé.

Avec cette méthode de polarisation des cathodes des photodiodes, la réponse électro-optique des photodiodes sur-éclairées introduit une variation de la réponse électro-optique de tout ou partie des autres photodiodes du circuit de détection alors que leur éclairement n'a pas varié. Ce phénomène peut par exemple provoquer des fausses alarmes.

### 3.2) Dimension du circuit de détection

La réalisation d'un contact P⁺⁺ à proximité d'une photodiode N⁺ doit respecter un ensemble de règles de conception. Pratiquement, il est impossible de dessiner un tel contact entre les photodiodes d'un circuit de détection dont les photodiodes sont dessinées à un pas réduit.

Cette difficulté pourrait être contournée en remplaçant une ou plusieurs photodiodes par un contact P⁺⁺. Mais cela aurait pour effet d'augmenter le nombre de pixels aveugles du capteur.

C'est pourquoi le contact P⁺⁺ 12 de la cathode commune est en général comme représenté figure 8 implanté en périphérie du circuit de détection. Les dimensions hors-tout du circuit de détection 17 en sont augmentées de manière significative par rapport aux dimensions de la zone sensible 16 occupée par la matrice de photodiodes.

Ceci est dû au fait que d'une part, il est d'usage de dessiner un contact ohmique P⁺⁺ 12 en forme d'anneau autour de la matrice 16 de photodiodes de façon à minimiser les variations spatiales de résistance série des photodiodes et que, d'autre part, il est nécessaire de respecter une distance minimum entre le contact ohmique P⁺⁺ 12 et les zones N⁺ des jonctions (2,1) des photodiodes.

Cette méthode ne permet donc pas de maximiser le taux de remplissage du circuit de détection 17 par ses photodiodes, ce qui se traduit par une perte de matériau à nombre de pixels donné, ou bien une réduction du nombre de pixels à dimensions de circuit 17 de détection données.

### 3.3 Procédé de fabrication du circuit de détection

Bien qu'intégrée dans la plupart des procédés de fabrication des circuits de détection, la réalisation d'un contact ohmique P⁺⁺ 12 n'est pas sans inconvénients.

Tout d'abord, cela augmente de manière significative le nombre d'étapes de fabrication. En effet, il est nécessaire de réaliser des zones dopées P⁺⁺ puis de prendre des contacts ohmiques sur ces zones.

Par ailleurs, les procédés technologiques mis en oeuvre pour réaliser les contacts ohmiques et les interconnexions doivent être compatibles à la fois avec les zones P⁺⁺ et les zones N⁺. Le choix des procédés technologiques est donc plus restreint que dans le cas où il est seulement nécessaire d'assurer une continuité électrique avec les zones N⁺.

En conclusion, la nécessité de réaliser le contact ohmique nécessaire à la polarisation de la cathode commune conduit à un procédé de fabrication plus complexe que celui nécessaire à la simple réalisation des photodiodes.

### 4) Brève description de l'invention.

L'invention supprime la nécessité de conserver le contact ohmique 12. De la sorte on peut obtenir un ensemble de photodétecteurs coplanaires constituant ensemble un circuit de détection d'image, chaque photodétecteur constituant en général un pixel de l'image, dans lequel la valeur du signal délivré par l'un des photodétecteurs n'est pas modifiée ou est peu modifiée par la valeur du signal délivré par d'autres photodétecteurs du capteur. Elle vise à obtenir un circuit de détection à plus grande densité surfacique, c'est-à-dire ayant un plus grand nombre de photodétecteurs par unité de surface d'un circuit de détection. Elle vise enfin, à une simplification de la fabrication d'un circuit de détection.

A toutes ces fins, l'invention est relative à un capteur d'images comportant :
- un circuit de détection constitués par un premier ensemble de photodiodes coplanaires portées par un substrat, chaque photodiode ayant une anode et une cathode,
- un circuit de lecture constitué par un ensemble de moyens élémentaires de lecture, le circuit de détection et le circuit de lecture étant interconnectés en sorte que chaque moyen élémentaire de lecture est couplé à l'anode d'une photodiode,
- des moyens pour polariser les photodiodes en créant une différence de potentiel entre chaque anode et chaque cathode de photodiode,
capteur d'image caractérisé en ce que le substrat du circuit de détection est équipé d'un second ensemble de diodes coplanaires et situées dans le même plan que celui du premier ensemble, chaque diode du second ensemble ayant une cathode et une anode, chaque diode du second ensemble étant connexe à au moins une photodiode du premier ensemble, chaque anode des diodes du second ensemble étant connectée ou connectable au travers du circuit de lecture à une première source de tension (Vₐₚₒₗ) polarisant en inverse les diodes du premier ensemble, et en ce que, chaque anode des diodes du second ensemble est connectée ou connectable au travers du circuit de lecture à une seconde source de tension (Vₖₚₒₗ) polarisant en direct les diodes du second ensemble, la tension de polarisation des photodiodes du premier ensemble étant ainsi contrôlée par le contrôle des tensions appliquées aux anodes du premier et du second ensemble.

La tension Vₐₚₒₗ qui est appliquée aux anodes des photodiodes ou diodes de détection pour les polariser est la tension de détection. La tension Vₖₚₒₗ qui est appliquée aux anodes des diodes du second ensemble ou diodes de contrôle pour les polariser est la tension de contrôle. La tension de contrôle appliquée à une anode d'une diode de contrôle impose un potentiel sur la cathode des diodes voisines.

Ainsi, on voit que grâce à cette façon de contrôler la cathode des diodes ou jonctions polarisées en détection d'un circuit de détection, l'impédance entre une cathode d'une jonction polarisée en détection et les cathodes les plus proches des diodes de contrôle est sensiblement la même.

On notera qu'il a été implicitement considéré jusqu'à présent :
1. que le substrat présente une homogénéité omnidirectionnelle,
2. que lorsqu'il y a plusieurs points d'application de la tension de cathode voisins d'une diode de photodétection, le courant de photodétection de cette diode se répartit en parallèle entre la photodiode et ces différents points.

Il en résulte que l'influence d'un éblouissement d'une diode ou d'un groupe de diodes détectrices voisines les unes des autres est limitée à une partie du détecteur délimitée par une ligne joignant les points d'application de la tension de référence qui sont les plus proches des jonctions situées en limite de la partie éblouie du détecteur.

L'application de la tension de référence pourra être effectuée par des traversées conductrices du circuit de lecture, appliquées directement au circuit de détection par l'intermédiaire de jonctions du circuit de détection polarisées en direct de façon à obtenir des impédances de jonction faibles. Ces diodes peuvent être des diodes dédiées uniquement à la polarisation.

Il sera vu plus loin que dans le mode préféré de réalisation, on utilise pour appliquer la tension de référence les diodes photodétectrices du circuit de détection qui sont immédiatement voisines de diodes polarisées en détection.

Ainsi, on contrôle le potentiel de la cathode d'une photodiode du circuit de détection au moyen des photodiodes qui lui sont connexes. Pour ce faire, il suffit de polariser les photodiodes connexes dans leur caractéristique directe, là où elles présentent une résistance dynamique très faible. La transmission du potentiel est assurée au travers du circuit de lecture, le contact entre le circuit de lecture et la photodiode étant assuré par des moyens connus.

L'invention est relative également à un procédé de polarisation des photodiodes d'un circuit de détection d'un capteur d'image, le circuit de détection ayant sur un même substrat, deux ensembles coplanaires de diodes, un premier comportant des photodiodes coplanaires et un second comportant des diodes de contrôle coplanaires, chaque diode de chacun des ensembles ayant une anode et une cathode, et une diode de contrôle étant connexe à au moins une photodiode, procédé caractérisé en ce que l'on applique aux anodes des diodes du premier ensemble une tension polarisant en inverse les diodes du premier ensemble et en ce que l'on applique aux anodes des diodes du second ensemble une tension polarisant en direct lesdites diodes du second ensemble.

### 5) Brève description des dessins

- la figure 1 comprenant les parties A et B, représente la réalisation matérielle d'une jonction N/P (partie A) et d'une jonction P/N (partie B), ainsi que leurs représentations symboliques ;
- la figure 2, représente des courbes courant-tension d'une photodiode, sous éclairement nul ou quasiment nul et sous éclairement non nul respectivement ;
- la figure 3 est un schéma électronique d'une section d'un capteur d'image à photodiode ;
- la figure 4 illustre les trois catégories de substrats que l'on peut rencontrer. Elle comprend les parties A, B, C ;
- les figures 5 et 6 illustrent le mode de contrôle d'une cathode commune selon le type de substrat ;
- la figure 7 est un schéma électrique équivalent d'un circuit de détection ;
- la figure 8 est un schéma de principe montrant l'implantation des diodes photodétectrices ;
- la figure 9 est un schéma équivalent électrique d'un capteur ;
- les figures 10 et 11 montrent des exemples d'implantations de diodes de contrôle sur un même substrat ;
- la figure 12 montre une coupe au travers de l'épaisseur, le long d'une ligne de jonctions implantées sur un substrat massif, épitaxié ou isolant ;
- la figure 13 représente un schéma équivalent électrique des jonctions représentées figure 12 ;
- la figure 14 représente un exemple de contrôle selon un mode préféré de réalisation d'une photodiode par des photodiodes connexes de cette diode ;
- la figure 15 représente un schéma électrique équivalent du circuit représenté figure 14 ;
- la figure 16 est une courbe montrant les caractéristiques courant-tension d'une photodiode polarisée en direct ;
- la figure 17 représente des exemples d'utilisation de différentes diodes connexes pour polariser une photodiode, elle comporte les parties A, B, C ;
- la figure 18 est un chronogramme de fonctionnement d'un capteur bi-dimensionnel réalisé selon le mode préféré de réalisation de l'invention ;
- la figure 19 représente un schéma de principe d'un capteur infrarouge réalisé selon l'invention ; et
- la figure 20 représente un schéma électronique d'un point élémentaire du circuit de lecture d'un capteur tel que représenté figure 19.

Les figures 1, 2, 3, 4, sont des figures informatives qui s'appliquent aussi bien à l'art antérieur qu'à la présente invention.

Les figures 5, 6, 7, 8, 9, sont des figures qui illustrent ou expliquent des aspects de l'art antérieur.

Les figures 1 à 9 ont déjà été commentées.

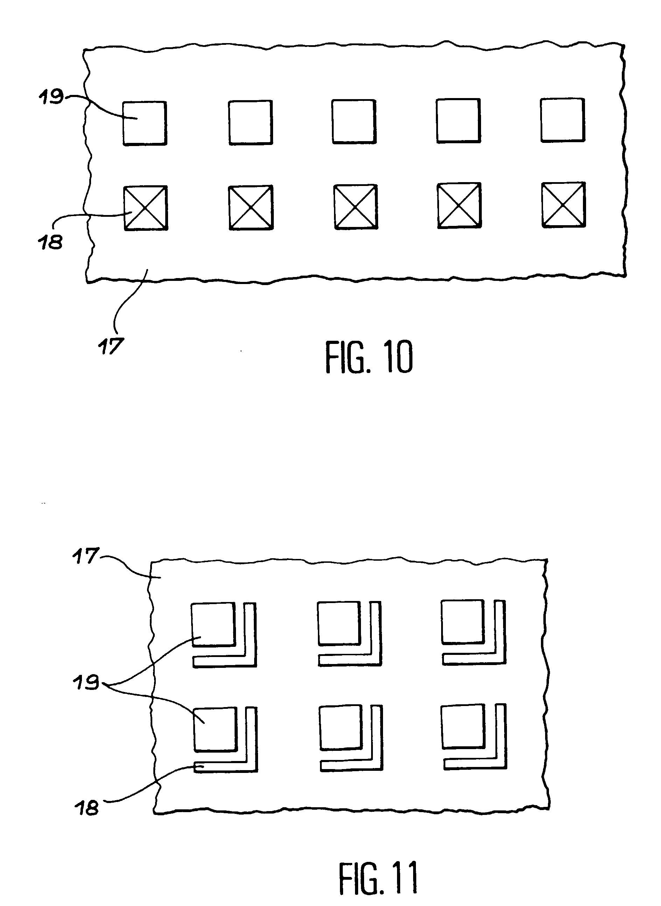

Les figures 10 à 20 illustrent des aspects et des explications relatives à la présente invention.

Dans les figures 1 à 20, les éléments ayant des fonctions identiques portent le même numéro.

### 6) Description d'exemples de réalisation

Comme il a été vu plus haut, l'invention consiste à imposer, par le contrôle de tension d'anode de diodes de contrôle, la tension de cathode de chaque photodiode de façon à égaliser entre elles les impédances apparentes de chaque photodiode.

De façon avantageuse, on implantera sur le circuit de détection des diodes que l'on pourra polariser en direct et dont l'une des électrodes sera couplée en permanence à une source de tension constante au travers du circuit de lecture.

Des modes géométriques d'implantation de telles diodes sont représentées figures 10 et 11.

La figure 10 représente le cas d'une barrette linéaire de photodétecteurs où toute la place nécessaire pour implanter des diodes de contrôle est disponible.

Dans ce cas, les diodes de contrôle 18 peuvent être alignées sur une ligne parallèle à la ligne d'implantation des photodiodes 19. Dans l'exemple représenté figure 10 chaque diode de contrôle 18 se trouve au droit d'une photodiode 19.

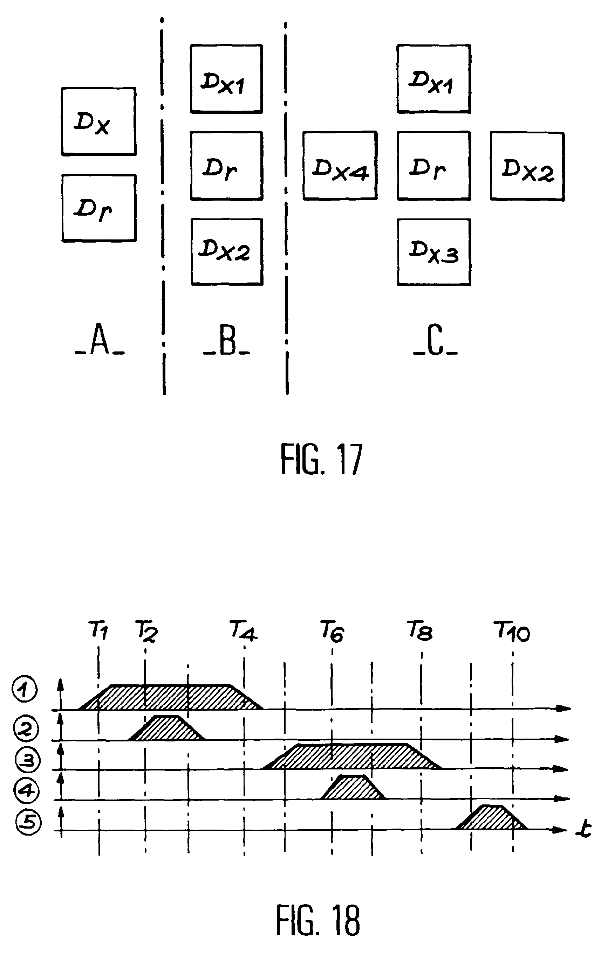

On peut aussi dans ce cas prévoir deux lignes de diodes de contrôle situées de part et d'autre de la ligne de photodiodes comme représenté figure 17 partie B, et dans ce cas chaque photodiode se trouve au droit de deux diodes de contrôle. La figure 17 sera commentée plus loin.

Dans le cas d'une matrice représentée schématiquement figure 11, la place prise par les diodes de contrôle se fait nécessairement au détriment de la densité surfacique des photodiodes. C'est pourquoi dans ce mode d'implantation on aura intérêt à donner aux diodes de contrôle 18 une forme à base de lignes étroites ; par exemple en équerre. C'est un tel exemple de réalisation qui est représenté figure 11 ou chaque photodiode 19 de forme carrée est entourée sur deux des côtés de la diode par les deux branches de l'équerre que forme la diode de contrôle 18.

Dans les exemples représentés figures 10 et 11, la diode de contrôle peut être une photodiode polarisée en direct de façon à avoir une faible résistance dynamique, ou une diode dédiée.

Dans le mode préféré de réalisation qui va maintenant être décrit, les diodes de contrôle et les photodiodes sont toutes des photodiodes. Ces photodiodes seront polarisées tour à tour en inverse ou en direct pour fonctionner comme photodiode ou comme diode de contrôle.

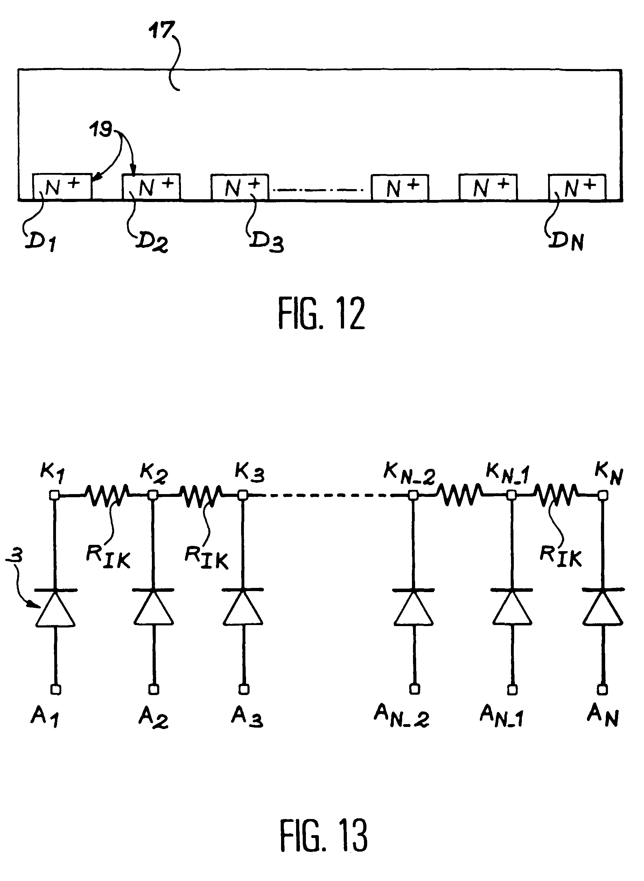

Une coupe technologique de principe du circuit de détection est représentée sur la figure 12. Les photodiodes 19 sont matérialisées par des jonctions N⁺ sur un matériau 1 semi-conducteur de type P et de résistivité p_{**SC**}. Le substrat peut être massif, épitaxié ou isolant et toutes les photodiodes sont coplanaires.

La différence essentielle avec le circuit de l'art antérieur représenté de la même manière figure 6, provient de l'absence dans le circuit selon l'invention du contact ohmique 12. Ce contact ohmique 12 n'est plus nécessaire pour la tension de cathode puisque selon le mode préféré de réalisation, cette tension de cathode est contrôlée par des photodiodes du circuit de détection polarisées en direct. On notera toutefois que le mode préféré de réalisation de l'invention peut être réalisé sur un substrat comportant un contact ohmique 12, ce contact ne servant à rien qu'à respecter un protocole de fabrication avant validation d'un nouveau protocole ou ayant un autre usage.

Le schéma électrique de la rangée de photodiodes de la figure 12 est représenté sur la figure 13 où la résistance R_{**IK**} représente la résistance entre deux cathodes connexes. Sa valeur dépend de la résistivité ρ_{**SC**} et de l'épaisseur du matériau, semi-conducteur, du pas des photodiodes et des caractéristiques géométriques de la jonction (surface, profondeur).

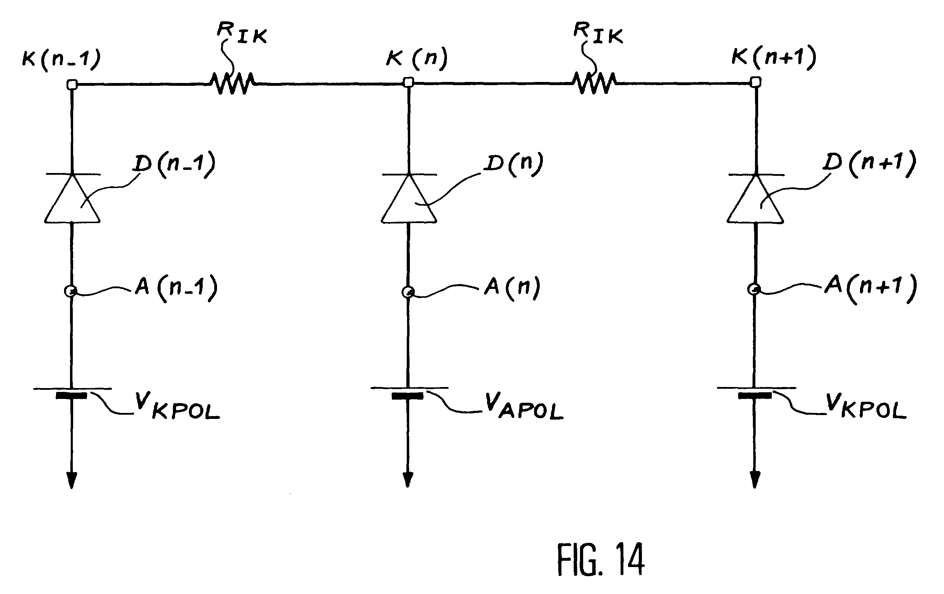

La cathode des photodiodes 3, représenté figure 13, est contrôlable par le circuit de lecture. Nous allons raisonner sur les trois photodiodes dont le schéma électrique est représenté sur la figure 14. Une source de tension V_{**APOL**} est appliquée à l'anode A[n] de la photodiode D[n], et la source de tension V_{**KPOL**} à l'anode des photodiodes connexes, en l'occurrence dans cet exemple mono-dimensionnel, les photodiodes D[n-1] et D[n+1].

Si nous supposons maintenant que la tension V_{**KPOL**} est suffisamment positive par rapport à la tension V_{**APOL**} :
- les photodiodes D[n-1] et D[n+1] sont polarisées dans la partie directe de leur caractéristique courant-tension, là où elles présentent une faible résistance dynamique ;
- la photodiode D[n] est polarisée dans la partie inverse de sa caractéristique courant-tension.

Pour les explications qui vont suivre on suppose, ce qui est le cas généralement, que les photodiodes ont des caractéristiques courant-tension identiques ou quasi identiques et que le substrat est homogène.

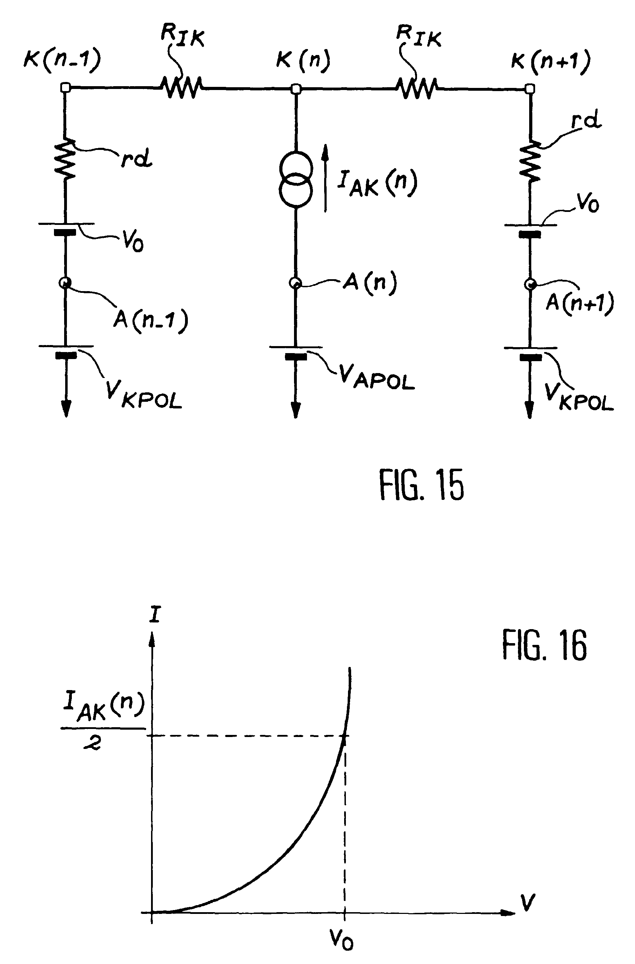

Vu les polarisations appliquées à chaque photodiode, le schéma électrique est celui de la figure 15 où :
- le générateur de courant I_{**AK**}[n] représente le courant délivré par la photodiode D[n] polarisée en inverse ;
- r_{**d**} représente la résistance dynamique des photodiodes connexes D[n-1] et D[n+1] polarisées en direct ;
- V_{**o**} une source de tension continue représentant la différence de potentiel entre l'anode et la cathode des photodiodes lorsqu'elles sont polarisées en direct et traversées par une fraction, en l'occurrence la moitié, du courant I_{**AK**}[n] délivré par la photodiode D[n].

Ce schéma montre clairement qu'en procédant ainsi, il est possible de contrôler - c'est-à-dire d'appliquer une tension sous basse impédance à la cathode de la photodiode D[n] via ses photodiodes connexes D[n-1] et D[n+1].

La tension appliquée à la cathode K[n] est donnée, en première approximation par la relation suivante :

V_{K}[n] = V_{KPOL} + Vₒ

où la tension de décalage V_{**o**} due aux diodes D[n-1] et D[n+1] polarisées en direct est obtenue à partir du courant délivré par la photodiode D[n] et de la caractéristique courant-tension des photodiodes connexes par la méthode graphique illustrée sur la figure 16.

Dans l'exemple qui vient d'être commenté, chaque photodiode polarisée en inverse est entourée par deux photodiodes polarisées en direct, le courant délivré par la photodiode polarisée en inverse est donc réparti par fractions supposées égales dans chacune des diodes de polarisation.

Le nombre de photodiodes connexes utilisé pour polariser la cathode d'une photodiode de détection peut être optimisé en fonction de l'application envisagée (nombre de pixels, format de l'image, résistivité du matériau semi-conducteur, dynamique d'éclairement).

Quelques exemples de connexité sont représenté sur la figure 17 :
une photodiode de contrôle D_{**x**} pour une photodiode de détection D_{**r**}, en partie A
deux photodiodes de contrôle D_{**x**} implantées sur deux côtés parallèles de la photodiode de détection D_{**r**}, en partie B.

La configuration représentée en partie A avec une ligne de diodes de contrôle connexe à une ligne de diodes de photodétection, peut être la même pour toutes les photodiodes du détecteur à l'exception d'une ligne située à la bordure du détecteur. Cette dernière possibilité dépend de la parité du nombre de lignes, nombre pair ou impair de lignes et de la façon dont les diodes de lignes sont utilisées alternativement comme diodes de contrôle. Dans la configuration représentée en partie B où une ligne de photodiodes polarisées en inverse est bordée de part et d'autre par une ligne de diodes polarisées en direct et assurant une fonction de transmission de la tension de cathode, il est clair que les lignes de photodiodes situées en bordure ne peuvent être polarisées de la même façon que les photodiodes des lignes centrales.

Il en est de même pour la configuration en damier représentée en partie C où les lignes et colonnes situées en bordure ne peuvent être polarisées de la même façon que les diodes des lignes ou colonnes centrales. Cela entraîne une non uniformité des réponses des diodes périphériques par rapport aux diodes centrales.

Les non-uniformités de réponse des photodiodes implantées à la périphérie d'un circuit de détection bi-dimensionnel peuvent être compensées par l'implantation de photodiodes de contrôle de façon à ce que les conditions aux limites soient identiques pour les photodiodes de détection de la périphérie et celles implantées au coeur du circuit de détection.

Un exemple de séquencement de la polarisation des photodiodes d'un capteur bidimensionnel sera maintenant décrit en référence à la figure 18. Dans cet exemple la formation des pixels de l'image complète se fait en deux prises de vue successives :
1. la tension V_{**KPOL**} est appliquée aux anodes des photodiodes des colonnes impaires entre les instants T₁ et T_{**4**} (ligne 1) de façon à polariser convenablement les cathodes des photodiodes des colonnes paires, les anodes de ces photodiodes étant polarisées à la tension V_{**APOL**} par leurs préamplificateurs. Les courants délivrés par les photodiodes des colonnes paires sont injectés (ligne 2) dans leurs préamplificateurs entre les instants T_{**2**} et T_{**3**} (conversion courant-tension par exemple). L'information représentative des pixels des colonnes paires peut être mémorisée au niveau du préamplificateur du circuit de lecture (échantillonnage-blocage par exemple) à partir de l'instant T_{**3**} ;
2. la tension V_{**KPOL**} est appliquée aux anodes des photodiodes des colonnes paires entre les instants T_{**5**} et T_{**8**} (ligne 3) de façon à polariser convenablement les cathodes des photodiodes des colonnes impaires, les anodes de ces photodiodes étant polarisées à la tension V_{**APOL**} par leurs préamplificateurs. Les courants délivrés par les photodiodes des colonnes impaires sont injectés dans leurs préamplificateurs entre les instants T_{**6**} et T_{**7**} (ligne 4) (conversion courant-tension par exemple). L'information représentative des pixels des colonnes impaires peut être mémorisée au niveau du préamplificateur du circuit de lecture (échantillonnage-blocage par exemple) à partir de l'instant T_{**7**}.
3. le multiplexage des informations stockées sur le circuit de lecture vers l'étage de sortie vidéo est effectué entre les instants T_{**9**} et T_{**10**} (ligne 5).

Cet exemple montre que l'invention permet de polariser les photodiodes d'un circuit de détection bi-dimensionnel en utilisant alternativement chaque photodiode comme un dispositif de détection puis comme dispositif de contrôle de sa/ses photodiode(s) connexe(s).

Le séquencement des polarisations pour la prise de vue d'une image complète, qui vient d'être décrit, correspond au cas représenté figure 17 partie B, où les photodiodes des lignes ou colonnes paires sont utilisées alternativement comme photodiodes ou comme diodes de contrôle. Le multiplexage des informations permet alors de reconstituer l'image complète.

Dans le cas où les photodiodes qui sont utilisées alternativement en photodiodes ou en diodes de contrôle sont les diodes situées sur les cases blanches d'un damier et celles situées sur les cases noires comme représenté figure 17 partie C, une image complète est constituée avec la moitié des photodiodes disponibles.

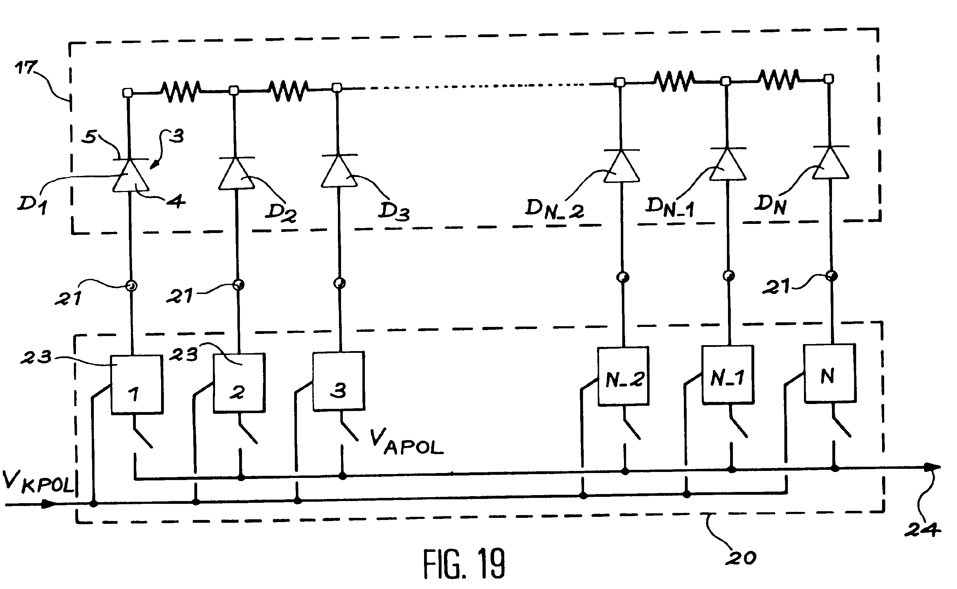

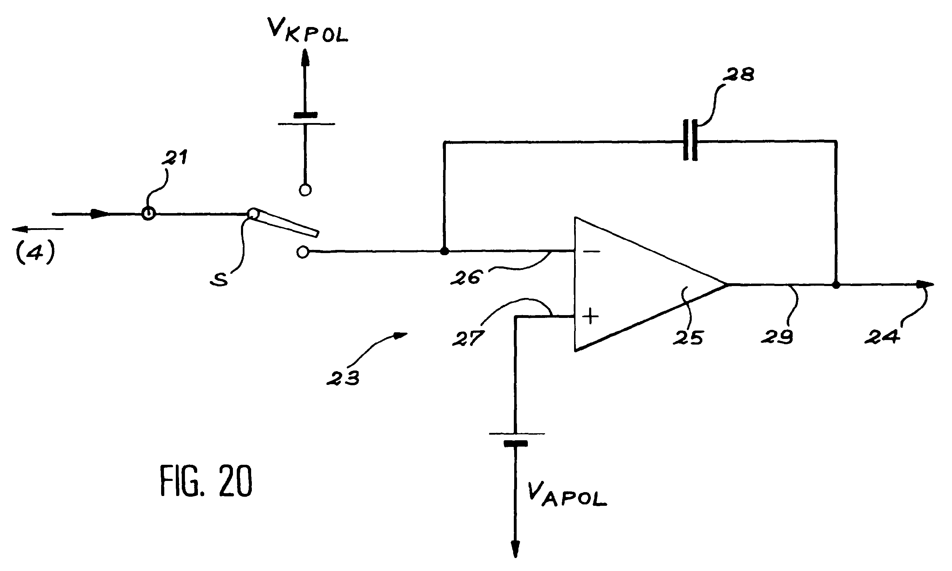

La façon matérielle de réaliser la commutation de chaque diode pour la polariser en direct à la tension d'anode V_{**KPOL**} ou en inverse à la tension d'anode V_{**APOL**} sera maintenant explicité en référence aux figures 19 et 20.

La figure 19 représente un schéma électrique de principe d'un capteur matriciel opérant dans la gamme spectrale infrarouge.

Les photodiodes 3 du circuit de détection sont des jonctions N⁺ réalisées sur une épitaxie d'HgCdTe de type P sur un substrat isolant en CdTe. Les anodes 4 des photodiodes 3 du circuit de détection 17 sont interconnectées par microbilles 21 à la circuiterie analogique implantée sur le circuit de lecture 20 sous chaque photodiode. Chacune de ces photodiodes 3 constitue un point élémentaire du circuit de détection 17 du capteur. Il lui correspond de façon bi-univoque un point élémentaire du circuit de lecture PEL constitué par un préamplificateur de charge 23.

Le préamplificateur de charges 23 constituant chaque PEL 23 assure de façon connue la conversion du courant délivré par chaque photodiode 3 en une tension qui sera multiplexée vers une sortie vidéo 24.

Le schéma électrique de principe de l'électronique implantée dans le PEL 23 est donné sur la figure 20. L'amplificateur de charge 23 est réalisé au moyen d'un amplificateur de tension 25 à entrées différentielles 26, 27. Un condensateur 28 est implanté en contre-réaction entre sa sortie 29 et son entrée inverseuse 26. Son entrée différentielle 27 est une masse virtuelle : la tension d'entrée de son entrée inverseuse 26 est égale à la tension appliquée à son entrée non inverseuse 27. La source de tension V_{**APOL**} correspondant à la polarisation inverse de la diode est appliquée de façon connue à l'entrée non inverseuse 27.

Selon l'invention un interrupteur S permet de commuter l'anode de la photodiode :
- sur l'entrée inverseuse, ce qui revient à lui appliquer la tension V_{**APOL**},
- sur la source de tension V_{**KPOL**} polarisant la photodiode en direct.

Ce capteur fonctionne selon le séquencement exposé en liaison avec la figure 18. La prise de vue des colonnes paires (resp. impaires) est réalisée en fermant les interrupteurs S des colonnes impaires (resp. paires) sur V_{**KPOL**} tandis que les interrupteurs S des colonnes paires (resp. impaires) sont fermés sur les entrées inverseuses 26 de l'amplificateur 25. En fin de prise de vue, l'information est mémorisée en ouvrant l'interrupteur S des colonnes paires (resp. impaires).

Les informations mémorisées dans chaque PEL 23 sont multiplexées de façon connue vers la sortie 24 lorsque la prise de vue des colonnes paires et celles des colonnes impaires sont terminées. On obtient ainsi la totalité des pixels d'une trame de l'image.

### 7) Retour sur les avantages de l'invention

L'invention ayant été décrite, le lecteur sera maintenant mieux à même de comprendre les avantages de l'invention exposés ci-avant de façon succincte et qui sont rappelés ci-après.

### 7-1 Point de polarisation indépendant de la position de la photodiode

Le courant délivré par chaque photodiode de détection se referme sur une alimentation à travers les photodiodes connexes polarisées en direct. La différence de potentiel aux bornes de chaque photodiode de détection est indépendante de sa position sur le circuit de détection.

L'invention permet donc de polariser la cathode de chaque photodiode sans variations spatiales.

Il est ainsi possible, lorsque la plage de polarisation optimale des photodiodes est étroite, de polariser un maximum de photodiodes à l'intérieur de cette plage, d'où une augmentation du taux de photodiodes performantes et par voie de conséquence une amélioration de la qualité de l'image.

### 7-2) durcissement au sur-éclairement

Dans le cas d'un sur-éclairement de forte intensité sur une zone limitée du circuit de détection, les courants délivrés par les photodiodes de détection sur-éclairées se referment via leurs diodes connexes de contrôle. La tension cathode des photodiodes de détection situées en dehors de la zone sur-éclairée n'est donc pas perturbée par la circulation des photocourants induits par le sur-éclairement.

L'invention limite donc les effets électriques induits par un sur-éclairement local à la zone sur-éclairée.

Le nombre de pixels perturbés par un éblouissement ponctuel est ainsi réduit au minimum.

### 7-3) Maximisation du taux de remplissage du circuit de détection

L'invention permet d'implanter des photodiodes sur la totalité du circuit de détection, jusqu'au bord du chemin de découpe.

Il est ainsi possible, à nombre de pixels donné, de réduire la surface du circuit de détection. L'augmentation du nombre de circuit réalisable par tranche provoque une augmentation du rendement de fabrication.

### 7-4) Réduction de la dimension hors tout du circuit de détection

L'invention utilise des jonctions identiques comme dispositif de photodétection et/ou de contrôle. Les règles de dessin de ces jonctions permettent de les implanter à un espacement minimum qui s'avère en général très inférieur à celui entre une jonction N⁺ et un contact ohmique sur matériau de type P.

L'invention permet donc de minimiser les dimensions hors-tout du circuit de détection.

Ceci a pour conséquence, dans le cas des circuits de détection hybridés retournés sur un circuit de lecture, tout étant égal par ailleurs, de diminuer les dimensions du circuit de lecture.

La réduction des dimensions du circuit de lecture a plusieurs effets :
- réduction de l'encombrement du senseur à format et pas donnés
- augmentation du format à pas et dimensions hors-tout du circuit de lecture donnés
- augmentation du rendement de fabrication du circuit de lecture à pas et format donné.

### 7-5) Simplification du procédé de fabrication du circuit de détection

L'invention permet de polariser les cathodes des photodiodes sans avoir recours à un contact ohmique sur le matériau P. Les étapes technologiques nécessaires à sa réalisation peuvent donc être supprimées.

L'invention permet de fabriquer des circuits de détection au moyen des seules étapes technologiques nécessaires à la réalisation des photodiodes.

La réduction du nombre d'étapes de fabrication a pour effet d'augmenter le rendement de fabrication, de réduire le temps de fabrication.

### ANNEXE

### Liste des références citées

[1] Hon-Sam WONG "Technology and Device Sealing Considération for CMOS Imagers - IEEE transaction on Electron Devices Vol. 43, N° 12 December 1996, p. 2131-2142.
[2] J. L. TISSOT ; F. BERTRAND - Colloque International OPTRONIQUE & DEFENSE 3-5 décembre 1996, MONTIGNY LE BRETONNEUX - FRANCE "Le développement des technologies infrarouges au LIR".
[3] Demande de brevet n° FR 95 04174 déposée le 7 avril 1995.

## Revendications

1. Capteur d'images comportant :
- un circuit de détection (17) constitué par un premier ensemble de photodiodes coplanaires (1, 2 ; 1', 2' ; 3, 19) portées par un substrat (6, 7, 9) chaque photodiode (1, 2 ; 1', 2' ; 3) ayant une anode (4) et une cathode (5),
- un circuit de lecture (20) constitué par un ensemble de moyens élémentaires (23) de lecture, le circuit de détection (17) et le circuit de lecture (20) étant interconnectés en sorte que chaque moyen élémentaire (23) de lecture est couplé à l'anode (4) d'une photodiode (1, 2 ; 1', 2' ; 3, 19),
- des moyens (23) pour polariser les photodiodes (1, 2 ; 1', 2' ; 3, 19) en créant une différence de potentiel entre chaque anode (4) et chaque cathode (5) de photodiode(1, 2 ; 1', 2' ; 3, 19),
capteur d'image caractérisé en ce que le substrat du circuit de détection (17) est pourvu d'un second ensemble de diodes (18, Dₓ) coplanaires et situées dans le même plan que celui du premier ensemble, chaque diode (18) du second ensemble ayant une cathode et une anode, chaque diode (18, Dₓ) du second ensemble étant connexe à au moins une photodiode (Dᵣ, 19) du premier ensemble, en ce que chaque anode des photodiodes (1, 2 ; 1', 2' ; 3, 19), du premier ensemble est connectée ou connectable au travers du circuit de lecture (20) à une première source de tension (Vₐₚₒₗ) polarisant en inverse les photodiodes (1, 2 ; 1', 2' ; 3, 19), du premier ensemble, et en ce que, chaque anode des diodes du second ensemble est connectée ou connectable au travers du circuit de lecture (20) à une seconde source de tension (Vₖₚₒₗ) polarisant en direct les diodes (18, Dₓ) du second ensemble, la tension de polarisation des photodiodes (1, 2 ; 1', 2' ; 3, 19), du premier ensemble étant ainsi contrôlée par le contrôle des tensions appliquées aux anodes du premier et du second ensemble.

2. Capteur d'images selon la revendication 1 caractérisé en ce que le nombre de photodiodes (1, 2 ; 1', 2' ; 3, 19), du premier ensemble est égal au nombre de diodes du second ensemble.

3. Capteur d'images selon l'une des revendications 1 ou 2 caractérisé en ce que les diodes des premier et second ensembles sont des photodiodes (1, 2 ; 1', 2' ; 3, 19), le circuit de lecture (23) comportant des moyens (S) pour connecter en alternance la première source de tension vers les anodes des photodiodes (1, 2 ; 1', 2' ; 3, 19) du premier ensemble, la seconde source de tension vers les anodes des diodes du second ensemble, puis vers les anodes des photodiodes (1, 2 ; 1', 2' ; 3, 19) des second et premier ensembles respectivement.

4. Capteur selon la revendication 2, caractérisé en ce que les moyens (23) élémentaires du circuit (20) de lecture comporte un commutateur commandable commutant une connexion (21) entre le circuit (17) de détection et le circuit de lecture entre deux positions ;
- une position dans laquelle cette connexion (21) est connectée ou connectable à la première source de tension V_{**APOL**} et une position dans laquelle cette connexion (21) est connectée ou connectable à la seconde source de tension V_{**KPOL**}.

5. Capteur d'images selon l'une des revendications 1 à 4 caractérisé en ce que les diodes (1, 2 ; 1', 2' ; 3, 18,19, Dₓ, Dᵣ) des premier et second ensembles sont disposées en lignes, chaque diode (1, 2 ; 1', 2' ; 3, 19) du premier ensemble se trouvant au droit d'une diode (18, Dₓ) du second ensemble.

6. Procédé de polarisation de photodiodes coplanaires (1, 2 ; 1', 2' ; 3, 19, Dᵣ) d'un circuit de détection (17) d'un capteur d'image, le circuit de détection (17) ayant sur un même substrat, deux ensembles coplanaires de photodiodes (1, 2 ; 1', 2' ; 3, 18,19, Dₓ, Dᵣ), un premier et un second, chaque diode (1, 2 ; 1', 2' ; 3, 18,19, Dₓ, Dᵣ) de chacun des deux ensembles ayant une anode et une cathode, et une photodiode du second ensemble étant connexe à au moins une photodiode (1, 2 ; 1', 2' ; 3, 19, Dᵣ), du premier ensemble, procédé caractérisé en ce que l'on applique en alternance de façon itérative aux anodes des photodiodes (1, 2 ; 1', 2' ; 3, 18, 19, Dₓ, Dᵣ) du premier ensemble une tension les polarisant en inverse pendant que l'on applique aux anodes des photodiodes (1, 2 ; 1', 2' ; 3, 18,19, Dₓ, Dᵣ) du second ensemble une tension les polarisant en direct, puis aux photodiodes (1, 2 ; 1', 2' ; 3, 18,19, Dₓ, Dᵣ) du premier ensemble une tension les polarisant en direct pendant que l'on applique aux anodes des photodiodes (1, 2 ; 1', 2' ; 3, 18,19, Dₓ, Dᵣ) du second ensemble une tension polarisant lesdites photodiodes (1, 2 ; 1', 2' ; 3, 18,19, Dₓ, Dᵣ) en inverse.
